# FASCICULE DE BREVET EUROPEEN

(11) **EP 1 395 405 B1**
(45) Date de publication et mention de la délivrance du brevet: **08.09.2010**
(21) Numéro de dépôt: 02748937.6
(22) Date de dépôt: 06.06.2002
(51) Int. Cl.: B28B 19/00, B28B 11/12

(54) **EXTRUDEUR POUR LA FABRICATION D'UNE PLAQUE A BASE DE LIANT TEL QUE PLATRE**
GLEITVORRICHTUNG ZUM HERSTELLEN EINER PLATTE BESTEHEND AUS BINDEMITTEL WIE GIPS
EXTRUDER FOR MAKING A BOARD BASED ON A BINDER SUCH AS GYPSUM PLASTER

(30) Priorité: 07.06.2001 FR 0107466
(43) Date de publication de la demande: 10.03.2004
(73) Titulaire: BPB Limited, Saint-Gobain House Binley Business Park Coventry CV3 2TT (GB)
(72) Inventeur: DERUSCO, Christian, F-78260 Acheres (FR); BOUSCAL, Patrice, I-86039 Termoli (IT); CHANTEREAU, Frédéric, F-92400 Courbevoie (FR)
(74) Mandataire: Quantin, Bruno Marie Henri
(86) Numéro de dépôt international: PCT/FR2002/001930
(87) Numéro de publication internationale: WO 2002/098622

(56) Documents cités:
- EP-A- 0 482 810
- WO-A-94/03318
- FR-A- 2 083 105
- US-A- 3 083 756
- US-A1- 2001 000 738

## Description

La présente invention concerne des plaques à base de liant tel que plâtre, ciment ou autre.

Ici, on entend par plaque un produit mince globalement plat, dont la hauteur est faible, comparée aux deux autres dimensions, que la section droite soit rectiligne ou non, par exemple en créneau, sinusoïdale telle qu'une tôle ondulée, ou autre.

Le document US 3 083 756 décrit un procédé pour la fabrication d'une plaque à base de plâtre où le gâchis de plâtre est déposé sur un parement défilant entraîné en continu par un convoyeur à bande, le gâchis traversant l'extrudeur soumis à des vibrations avant la découpe effectuée ultérieurement.

La présente invention a pour but de proposer un procédé de réalisation de telles plaques de faible coût avec une tenue mécanique accrue.

Ainsi, selon l'invention, un procédé de fabrication d'une plaque à base de liant tel que plâtre ou ciment, comprenant des étapes de mélanger une composition de liant et d'eau pour former la plaque ; déposer le mélange sur un support défilant, lequel est entraîné en continu par un convoyeur à bande, ledit mélange traversant un extrudeur soumis à des vibrations pour former une plaque et découper la plaque obtenue à longueur, **caractérisé en ce que** la composition comportant également des granulats par suite de l'extrusion sous vibrations de la composition, la partie inférieure de la plaque a une zone densifiée de faible épaisseur exempte de granulats.

Avantageusement, la plaque est découpée tant en longueur qu'en largeur.

De préférence, le dépôt est réalisé sur un parement dit inférieur ; le dépôt est recouvert d'un parement dit supérieur.

Avantageusement, le parement est constitué d'une grille et/ou d'un voile. De préférence, la grille est en fibres de verre.

Avantageusement, le voile recouvre la grille sur toute sa largeur : en variante, le voile est en forme de bande et ne recouvre que les bords latéraux de la grille.

De préférence, le voile est un mat, de préférence en fibres de verre.

Avantageusement, la découpe est une découpe au jet d'eau.

Les bords latéraux des plaques sont préalablement formés par retournement de la grille inférieure puis coupés droits ; la partie retournée de la grille inférieure est recouverte de la grille supérieure associée ou non à un voile ; en variante, la partie retournée de la grille Inférieure recouvre la grille supérieure associée ou non à un voile.

De préférence, au moins les bords latéraux de la grille Inférieure sont associés à un voile.

Lorsque les bords sont coupés droits, avantageusement la coupe est faite dans la partie de recouvrement.

Selon une autre forme de réalisation, le dépôt est conduit en sorte que deux des bords latéraux de la plaque sont amincis.

En variante, l'un au moins des parements est un carton, en remplacement de la grille et/ou du voile.

La présente invention a également pour objet un dispositif pour la mise en ouvre du procédé, comportant un mélangeur de la composition, un support défilant sur lequel est déposé le mélange, un convoyeur à bande pour entraîner en continu le support défilant, un extrudeur comportant une filière transversale d'extrusion pour former la plaque à partir du mélange, un poste de découpe de la plaque à longueur, et un vibreur apte à soumettre l'extrudeur à des vibrations.

Avantageusement, la filière est munie d'une lèvre supérieure et d'une lèvre inférieure qui porte sur sa face inférieure au moins un vibreur : la distance entre les lèvres supérieure et inférieure de la filière est réglable.

De préférence, l'axe du vibreur est orientable horizontalement et/ou verticalement.

Avantageusement, la filière d'extrusion a la forme générale d'un rectangle dont les extrémités des longueurs se faisant face se rapprochent légèrement l'une de l'autre vers l'extérieur.

La présente invention a également pour objet une plaque à base de liant tel que plâtre ou ciment comprenant un mélange d'une composition d'un liant tel que plâtre ou ciment et de l'eau, **caractérisée en ce que** la composition comporte en outre des granulats et en ce que la partie inférieure du corps de la plaque a une région densifiée de faible épaisseur exempte de granulats de faible densité.

La présente invention a également pour objet l'utilisation d'une telle plaque, dans laquelle le liant est un liant cimentaire, pour former ou recouvrir des murs, parois, planchers ou toitures, à l'intérieur ou à l'extérieur de bâtiments, tels que des cuisines industrielles, des laboratoires agro-alimentaires, des douches, des salles de bains, des bassins ou des piscines, et/ou des salles fréquemment lavées au jet d'eau, telles que salles de bâtiments agricoles ou de boucheries industrielles, ainsi que l'utilisation d'une telle plaque, dans laquelle le liant est à base de plâtre, pour former ou recouvrir des murs, parois ou autres.

La présente invention sera mieux explicitée à l'aide des exemples illustratifs, mais non limitatifs, qui suivent ainsi qu'en référence aux dessins dans lesquels :
- la figure 1 est un diagramme représentatif d'un procédé selon l'invention ;
- les figures 2 à 4 montrent un extrudeur mis en oeuvre dans le procédé selon l'invention, la figure 2 étant une vue en élévation et les figures 3 et 4 des vues selon les flèches III et IV de la figure 2 respectivement :
- la figure 5 est une vue analogue à la figure 3 et montre une variante ;
- la figure 6 est une vue en coupe partielle d'une plaque selon l'invention avant découpe de ses bords longitudinaux ;
- la figure 7 est une vue en coupe partielle d'une plaque selon l'invention après découpe de ses bords longitudinaux selon la ligne C de la figure 6 ;
- les figures 8 à 17 sont des vues schématiques analogues à la figure 6 montrant chacune une variante de plaque selon la ligne C avant découpe de ses bords longitudinaux.

Le liant du corps de plaque comprend un mélange de ciment Portland, de clinker sulfoalumineux et une source de sulfate de calcium (anhydrite, plâtre ou gypse). Par ciment Portland, il faut comprendre un ciment normalisé suivant la norme européenne EN 197-1 (de type I, II, III, IV et V). Des exemples de tels ciments sont la ciment Portland ordinaire ainsi que tout autre ciment avec ajouts (Portland composé, pouzzolanique, de haut fourneau, aux laitiers et aux cendres).

Les exemples de ciments el-dessus présentent des surfaces spécifiques Blaine composes entre environ 3700 cm²/g et environ 5050 cm²/g.

La teneur en ciment Portland dans le liant peut varier entre 30 et 80 %. Dans tout ce domaine, il est possible d'obtenir des formulations à prise rapide (temps de début de prise inférieur à 20 min). Une fourchette préférentielle se situe entre 50 et 70 % qui permet d'obtenir des performances mécaniques optimales.

Par clinker sulfoalumineux, il faut comprendre tout matériau résultant de la cuisson à une température comprise entre 90.0°C et 1450°C ("clinkérisation") de mélanges contenant au moins une source de chaux (par exemple les calcaires qui ont une teneur en CaO variant entre 50 % et 60 %), au moins une source d'alumine (par exemple les bauxites ou autre sous-produit de fabrication contenant de l'alumine), et au moins une source de sulfate (gypse, gypses chimiques, plâtre, anhydrite naturelle ou synthétique, cendres sulfocalciques). Le clinker sulfoalumineux utilisé dans la présente invention présente une teneur en 4CaO.3Al2O₃.SO₃ (aussi représenté par C₄A₃S̅) supérieure à 30 %. Les analyses élémentaires et les constituants principaux de deux types de clinkers sulfoalumineux utilisables, caractérisés par des teneurs respectives en C₄A₃S supérieures à 47 % sont présentées dans les tableaux 1 et II ci-après :

**Tableau I**

| OXYDE | CLINKER 1 | CLINKER 2 |
|---|---|---|
| SiO₂ | 3,6 % | 7,6% |
| Al₂O₃ | 45,3% | 27,9 % |
| Fe₂O₃ | 0,9% | 7,0 % |
| CaO | 37,0 % | 45,1 % |
| SO₃ | 7,8% | 7,9% |
| TiO₂ | 2,6 % | 2,2 % |
| Autres | 2,8% | 2,3% |

**Tableau II**

| Constituants | CLINKER 1 | CLINKER 2 |
|---|---|---|
| C₄A₃S̅ | 60 % | 47% |
| CA, CA₂, C₁₂A₇ | 14 % | - |
| C₂S | - | 22 % |
| C₂AS | 17 % | - |
| CS | - | 3% |
| C₄AF | 3% | 22 % |
| CT | 4% | 4% |
| Autres | 2% | 2% |

La présence de chaux libre CaO peut être tolérée jusqu'à 10 % dans le clinker sulfoalumineux sans nuire aux propriétés d'usage du liant utilisé dans le cadre de la présente invention. Cette présence peut se produire lorsque, par exemple, le clinker est obtenu par cuisson à relativement basse température.

La teneur en clinker sulfoalumineux peut varier entre 20 % et 70 % dans le liant.

Lorsque la finesse (surface spécifique Blaine) du clinker sulfoalumineux se situe entre 2500 cm²/g et 7000 cm²/g, et particulièrement entre 3500 et 6500 cm²/g, la cinétique d'hydratation du liant n'est pas significativement modifiée, et permet d'obtenir une prise et un durcissement rapides.

S'agissant de la source de sulfate, celle-ci peut être choisie indifféremment parmi le gypse (ou gypses chimiques), le plâtre, ou l'anhydrite (naturelle ou non), ou encore les cendres sulfocalciques. La teneur en SO₃ provenant de la source de sulfate peut aller jusqu'à 10 % en masse par rapport au liant total (ce qui correspond par exemple à une teneur en plâtre jusqu'à 20 % par rapport au liant total). Une composition privilégiée correspond à un apport en sulfate tel que le rapport massique r défini plus haut soit voisin de 2. C'est précisément dans ce cas que les conditions stoechiométriques de formation de l'ettringite sont respectées :

C₄A₃S̅ +2 CS̅ H_{0.5}+ 37 H → C₆AS̅₃H₃₂ + 2AH₃

Cette composition privilégiée permet de garantir une durabilité accrue des plaques. En effet, l'absence de sulfate conduit à la formation de monosulfoaluminate de calcium C₄AS̅ Hₓ instable vis à vis par exemple des eaux sulfatées conduisant a posteriori à la formation d'ettringite expansive. A contrario, un excès de sulfate peut conduire à une instabilité des produits minces vis à vis de l'humidité.

Si on privilégie les résistances mécaniques à très court terme, le sulfate préféré de l'invention est le plâtre. Si l'on privilégie la plasticité, le sulfate préféré est l'anhydrite.

Par (super)plastifiant entrant dans la composition du liant adjuvanté, il faut comprendre tout composé organique capable d'améliorer la capacité de mise en oeuvre (ou ouvrabilité) du mortier léger. Il peut aussi dans le cas de la présente invention permettre une réduction d'eau significative, à ouvrabilité constante, qui contribue à l'obtention de performances mécaniques plus élevées, pour la confection de plaques légères.

Selon la norme EN 934-2 : 1997, un adjuvant réducteur d'eau permet de réduire la quantité d'eau nécessaire d'au moins 5 % par rapport à une composition cimentaire non adjuvantée, et un adjuvant haut réducteur d'eau permet de réduire la quantité d'eau nécessaire d'au moins 12 % par rapport à une composition cimentaire non adjuvantée.

Les adjuvants (super)plastifiants (haut) réducteur d'eau utilisés peuvent être des sels alcalins (Li, Na, K) ou alcalino-terreux (Ca, Mg) issus de la condensation entre l'acide β-naphtalène sulfonique et le formaldéhyde (type Cimfluid 230 ou 232 (Axim, Ciments Français)), entre la mélamine sulfonée et le formaldéhyde (type Cimfluid ML (Axim, Ciments Français)) ou de lignosulfonates.

Un adjuvant privilégié dans le cadre de la présente invention est le sel alcalin ou alcalino-terreux issu de la condensation entre la mélamine sulfonée et le formaldéhyde (type Cimfluid ML) qui permet d'obtenir une fluidité élevée et ne provoque pas de retard de prise significatif malgré les dosages élevés utilisés.

Les teneurs en Cimfluid ML varient entre 0,5 et 7 % (% massique par rapport au poids du liant).

Comme on le sait, de manière générale, est considéré comme retardateur de prise tout composé minéral ou organique permettant d'allonger significativement le temps de prise de la formulation d'un mortier sans pénaliser sa rhéologie. L'intérêt d'un tel adjuvant réside dans la possibilité de contrôler la prise de la formulation et de la retarder éventuellement, pour faciliter une bonne mise en oeuvre. Des retardateurs préférés sont l'acide citrique, les gluconates ou encore les polyacrylates ou polyméthacrylates (du type Cimfluid 2000 AC) qui apportent en outre une nette amélioration de l'ouvrabilité de la pâte.

Il est bien évident que la formulation idéale résulte d'un compromis entre le dosage en eau, la teneur en (super)plastifiant (haut) réducteur d'eau et la teneur en retardateur, de façon à obtenir l'ouvrabilité, le temps d'utilisation et les performances mécaniques souhaitées. Le rapport pondéral eau/liant utilisé est généralement compris entre 0,2 et 0,5. Au delà de cette valeur les performances mécaniques chutent de façon vertigineuse. Pour un rapport pondéral eau/liant inférieur à 0,2, il n'y a pas suffisamment d'eau pour satisfaire les réactions d'hydratation du liant ; il peut subsister alors du liant anhydre qui peut nuire à la durabilité du matériau en milieu humide. De façon préférentielle, le rapport eau/liant utilisé est compris entre 0,25 et 0,40.

### EXEMPLES :

Préparation d'une composition de corps de plaque selon l'invention :
La formulation de la base est la suivante (composition 1) :

| | |
|---|---|
| CPA CEM I 52,5 | 60 g |
| Clinker sulfoalumineux (1) | 30 g |
| Gypse | 10g |
| Adjuvant | x g |
| Eau totale | 30 g |
| (dont celle des adjuvants) | |

Dans cette composition cimentaire de base, ont été étudiées les différences de comportement en faisant varier les proportions relatives x, ainsi que la nature des adjuvants : compositions des exemples 1, 5, 7, 10 et 12, présentées ci-après.

Les mesures effectuées sur ces compositions sont les suivantes :
- *Mesure du temps d'utilisation :* Le mode opératoire consiste à suivre le comportement rhéologique de la composition en malaxage continu à vitesse imposée de 300 tr/min en fonction du temps. Le temps d'utilisation est alors défini par le temps au bout duquel le couple résistant mesuré est égal à 0,05 N.m. Le paramètre Δt₂ calculé correspond au temps nécessaire pour que le couple résistant mesuré passe de 0,05 N.m à 0,1 N.m. Il permet de rendre compte de la vitesse de durcissement de la composition : plus ce temps est court et plus la vitesse de durcissement est élevée.
- *Mesure de l'étalement initial :* Le mode opératoire consiste à effectuer une mesure rhéologique 1 mn 20 après le gâchage. Celle-ci est effectuée à l'aide d'un anneau (appelé anneau de Smidth) dont les dimensions sont les suivantes : diamètre intérieur = 60mm, hauteur = 50mm. Le malaxage de la pâte est réalisé pendant 40 sec à la vitesse de 250 tr/min et la mesure de l'étalement est effectuée au bout de 1 min 20.
- *Mesure du temps de prise* : Le mode opératoire adopté consiste à mesurer en fonction du temps la résistance à la pénétration d'une aiguille cylindrique de 3 mm de diamètre dans la formulation à tester à l'aide du texturomètre TA XT2 (*Société Rhéo*). La vitesse et la distance de pénétration sont respectivement fixées à 2 mm/s et 10 mm de profondeur. Les temps de début et de fin de prise mesurés correspondent respectivement aux temps nécessaires pour obtenir une force de 10N et de 50N à la profondeur de 10 mm. Contrairement à la mesure du temps d'utilisation, la mesure du temps de prise est effectuée au repos sans perturber l'échantillon en cours de prise par un malaxage. Le paramètre Δt₁ calculé correspond au temps nécessaire pour que la force mesurée passe de 10 N à 50 N. II permet de rendre compte de la vitesse de durcissement de la composition : plus ce temps est court et plus la vitesse de durcissement est élevée.

Les différentes compositions étudiées sont présentées ci-après :

### EXEMPLE 1 :

Cette composition renferme la formulation de base et du superplastifiant Cimfluid ML seul :

| ADJUVANT x(g) ML* | ETALEMENT (mm) | TEMPS D'UTILISATION (min) | TEMPS DE DEBUT DE PRISE (min) | TEMPS DE FIN DE PRISE (min) | Δt₁ (min) | Δt₂ (min) |
|---|---|---|---|---|---|---|
| 2 | 146 | 6,8 | 14,0 | 21,5 | 7,5 | 2,0 |
| 4 | - | 18,0 | 14,8 | 25,6 | 10,8 | 3,3 |
| 8 | - | 17,0 | 16,5 | 27,0 | 10,5 | 3,6 |

| | | | | | | |
|---|---|---|---|---|---|---|
| **ML*=*Cimfluid ML, (-):non mesuré* | | | | | | |

Une valeur de 60 mm correspond à un étalement nul (valeur du diamètre de cône utilisé pour la mesure).

Le superplastifiant Cimfluid ML seul donne des résultats satisfaisants.

Les exemples suivants (2 à 6) ont été réalisés également avec le superplastifiant Cimfluid ML seul.

EXEMPLE 2 : Comparaison de deux utilisations d'un clinker sulfoalumineux, de teneurs en sulfoaluminate de calcium C₄A₃S̅ différentes.

Les formulations étudiées sont les suivantes :

| COMPOSITION | 2a | 2b |
|---|---|---|
| CEM I 52,5 | 60 g | 50g |
| Clinker sulfoalumineux | Type 1 (tableau 1) 30g | Type 2 (tableau 1) 43 g |
| Teneur en C₄A₃S dans le clinker | 56% | 35% |
| Plâtre | 10g | 7 g |
| Adjuvant = Cimfluid ML | 2 g | 2 g |
| Eau | 30 g | 30 g |

Les temps de début de prise mesurées sur les compositions 2a et 2b sont respectivement de 6 min et de 7 min 50 s. La composition 2a présente un rapport r égal à 2,48.

EXEMPLE 3 : Cet exemple montre les effets sur les temps de début et de fin de prise, de la teneur en ciment Portland dans le liant, avec une teneur en plâtre maintenue constante et égale à 10 %, le complément à 100 % étant du clinker sulfoalumineux. Ces essais sont réalisés en présence de 2 % de Cimfluid ML et en l'absence de granulats légers, le rapport massique eau/liant étant de 0,30.

Le tableau suivant montre que pour des teneurs en ciment Portland comprises entre 36 et 76 %, le temps de début de prise est égal ou inférieur à 10 minutes.

| Ciment PORTLAND % dans le liant | TEMPS (min) DE DEBUT DE PRISE | TEMPS (min) DE FIN DE PRISE |
|---|---|---|
| 36 | 10 | 13 |
| 54 | 6 | 8 |
| 60 | 6 | 8 |
| 68 | 7 | 9 |
| 76 | 8 | 10 |

### EXEMPLE 4 :

A la composition 2a de l'exemple 2, on a ajouté 2 g de Billes Polystyrène expansé.

Les mesures de temps de prise, ainsi que des résistances mécaniques à la flexion (Rf) et à la compression (Rc) ont été effectuées sur des éprouvettes (4 x 4 x 16) cm³ de densité égale à 1 au bout de 20 min, 60 min et 24 heures. Les valeurs obtenues sont présentées sur le tableau ci-après :

| MESURE | VALEUR |
|---|---|
| DENSITE (à 20 min) | 1 |
| Rf (à 20 min) | 0,9 MPa |
| Rc (à 20 min) | 2,50 MPa |
| Rf (à 60 min) | 1,20 MPa |
| Rc (à 60 min) | 3,40 MPa |
| Rf (à 24 h) | 1,80 MPa |
| Rc (à 24 h) | 8,80 MPa |

### EXEMPLE 5 :

Avec une formulation identique à celle de l'exemple 4, mais en faisant varier la teneur en ciment Portland, les résistances mécaniques à la flexion (Rf) et à la compression (Rc) sur éprouvettes (4 x 4 x 16) cm³ après 24 heures ont été mesurées. Les résultats sont présentés dans le tableau ci-après :

| TENEUR EN CIMENT PORTLAND % | DENSITE | 24 heures | |
|---|---|---|---|
| | | Rf(MPa) | Rc(MPa) |
| 47 | 0,98 | 1,6 | 10,2 |
| 60 | 1,00 | 1,8 | 8,8 |
| 63 | 1,01 | 2,1 | 9,0 |
| 66 | 0,99 | 1,7 | 8,3 |
| 68 | 0,99 | 1,7 | 8,3 |

### EXEMPLE 6 : Utilisation de ciment Portland et de clinker sulfoalumineux de surfaces spécifiques (Blaine) différentes.

La formulation étudiée dans tous les cas est la composition 2a précédente à laquelle ont été rajoutées des billes de polystyrène de façon à obtenir une densité très proche de 1. L'influence de la surface spécifique (Blaine) du ciment Portland et de celle du clinker sulfoalumineux sur les performances mécaniques à très court terme ont été étudiées.

| Ciment Portland CEM I (*) | Surface Spécifique (Blaine) (cm²/g) | Densité | t = 20 minutes | | t = 24 heures | |
|---|---|---|---|---|---|---|
| | | | Flexion Rf (MPa) | Compression Rc (MPa) | Flexion Rf (MPa) | Compression Rc (MPa) |
| 6a | 3720 | 0,95 | 1,0 | 3,1 | 1,9 | 8,7 |
| 6b | 4050 | 1,01 | 0,9 | 3,5 | 1,9 | 8,4 |
| 6c | 4420 | 0,95 | 0,9 | 3,2 | 1,9 | 7,4 |
| 6d | 5040 | 1,01 | 0,9 | 3,5 | 1,8 | 7,0 |

| | | | | | | |
|---|---|---|---|---|---|---|
| (*) : la surface spécifique du clinker sulfoalumineux utilisée est égale à 4500 cm²/g | | | | | | |

| Ciment sulfo alumineux (**) | Surface Spécifique (Blaine) (cm²/g) | Densité | t = 20 minutes | | t = 24 heures | |
|---|---|---|---|---|---|---|
| | | | Flexion Rf (MPa) | Compression Rc (MPa) | Flexion Rf (MPa) | Compressior Rc (MPa) |
| 6e | 3800 | 0,95 | 1,1 | 3,1 | 1,9 | 8,7 |
| 6f | 4500 | 1,02 | 1,2 | 2,9 | 1,9 | 9,8 |
| 6g | 5000 | 0,98 | 0,9 | 3,2 | 2,0 | 9,7 |

| | | | | | | |
|---|---|---|---|---|---|---|
| (**) : la surface spécifique du ciment Portland utilisée est égale à 3720 cm²/g | | | | | | |

Dans la fourchette de surface spécifique étudiée (3500-5500 cm²/g) que ce soit dans le cas du clinker sulfoalumineux ou du ciment Portland, la cinétique d'hydratation de la composition 2a n'est pas significativement modifiée comme en témoignent les performances mécaniques obtenues qui sont similaires.

### EXEMPLE 7 :

Les deux adjuvants : le superplastifiant (Cimfluid ML) et le retardateur poly(méth)acrylate (Cimfluid AC) sont utilisés simultanément à des teneurs présentées dans le tableau ci-dessous, dans la composition cimentaire de base :

| ADJUVANT x (g) | | ETALEMENT (mm) | TEMPS D'UTILISATION (min) | TEMPS DE DEBUT DE PRISE (min) | TEMPS DE FIN DE PRISE (min) | Δt₁ (min) | Δt₂ (min) |
|---|---|---|---|---|---|---|---|
| ML* | AC* | | | | | | |
| 2 | 0,3 | 156 | 16,5 | - | - | - | 2,1 |
| 2 | 0,6 | 202 | 26,3 | - | - | - | 2,2 |
| 2 | 1 | 217 | 32,2 | 14,2 | 25,5 | 11,3 | 2,2 |

| | | | | | | | |
|---|---|---|---|---|---|---|---|
| **ML*=*Cimfluid ML, *AC*=*Cimfluid 2000AC* | | | | | | | |

L'utilisation de 2 % de Cimfluid ML permet d'obtenir une formulation cimentaire à prise et durcissement rapide utilisable dans le cadre de la fabrication de produits minces légers à base de ciment.

L'utilisation de Cimfluid 2000AC jusqu'à des teneurs de 1 % dans cet exemple permet de contrôler la durée d'utilisation de la composition de base (à 2 % de Cimfluid ML) qui peut aller jusqu'à environ 30 minutes. En outre, cet ajout permet d'accroître l'ouvrabilité initiale de la composition sans modifier de façon significative les temps de début et de fin de prise. Les valeurs de Δt₁ et Δt₂ montrent que, même avec 1 % de Cimfluid 2000AC, la vitesse de durcissement n'est que légèrement plus faible.

### EXEMPLE 8 :

Avec une formulation identique à celle de la composition de l'exemple 4 avec une teneur en polymélamine sulfonate égale à 2 % et en ajoutant 1 % de poly(méth)acrylate, les résistances à la flexion (Rf) ont été mesurées après 1 h 30 et 24 heures directement sur des plaques minces fabriquées selon l'invention, de dimensions L = 100 mm, 1 = 75 mm, e = 12,5 mm, à partir de compositions où seule la teneur en ciment Portland varie. Des billes de polystyrène expansé de granulométrie ≤ 1 mm, ont été ajoutées au liant à raison de 2 % en masse. Les résultats sont présentés dans le tableau suivant :

| CIMENT PORTLAND (% dans liant) | DENSITE | 1 h 30 | 24 heures |
|---|---|---|---|
| | | Rf (MPa) | Rf (MPa) |
| 60 | 1,05 | 1,46 | 1,70 |
| 64 | 1,07 | 2,10 | 2,26 |
| 67 | 1,02 | 1,30 | 1,61 |
| 69 | 1,07 | 1,37 | 1,79 |

Comme on le voit, les résistances à la flexion sont notables dès 1h30.

### EXEMPLES 9 et 9bis :

Dans ces exemples ont été comparées les performances mécaniques à la compression (Rc) et à la flexion (Rf) de deux compositions préparées en présence ou non de Li₂CO₃ (respectivement 9bis et 9).

Les formulations sont les suivantes :

| | | |
|---|---|---|
| . liant (100 %) | | |
| clinker sulfoalumineux 1 | | 45 % |
| ciment Portland CEM 152,5 | | 40 % |
| Plâtre | | 15 % |
| . adjuvants ( % par rapport au liant) | | |
| | - Cimfluid ML | 1,5 % |
| | - Cimfluid AC 2000 | 0,3 % |
| | - billes de polystyrène (≤ 1 mm) | 1,5% |
| | - Li₂CO₃ | 0 % (ex. 9) |
| | | 0,5 % (ex. 9bis) |
| . eau 30 % par rapport au liant | | |

Les performances obtenues sont présentées dans le tableau suivant :

| MESURE | Ex. 9 sans Li₂CO₃ | Ex. 9bis avec Li₂CO₃ |
|---|---|---|
| DENSITE (à 20 min) | 0,98 | 1,00 |
| TEMPS DE PRISE | < 8 min | < 8 min |
| Rf (20 min) | 1,04 MPa | 1,7 MPa |
| Rc (20 min) | 3,3 MPa | 5,8 MPa |
| Rf (24 heures) | 1,6 MPa | 1,9 MPa |
| Rc (24 heures) | 10,2 MPa | 12,6 MPa |

### EXEMPLE 10 :

Le polymélamine sulfonate (Cimfluid ML) à une teneur de 2 % et l'acide citrique à des teneurs variables ont été ajoutés à la composition cimentaire de base. Les résultats obtenus sont présentés ci-après :

| ADJUVANT X (g) | | ETALEMENT (mm) | TEMPS D'UTILIS ACTION (min) | TEMPS DE DEBUT DE PRISE (min) | TEMPS DE FIN DE PRISE (min) | Δt₁ (min) | Δt₂ (min) |
|---|---|---|---|---|---|---|---|
| ML* | acide citrique | | | | | | |
| 2 | 0,4 | 78 | 14,3 | 17,6 | 26,5 | 8,9 | 2,6 |
| 2 | 1 | 65 | 20,3 | 21,8 | 34,4 | 12,6 | 3,0 |
| 2 | 1,5 | 64 | 50,5 | - | - | - | 22,8 |

| | | | | | | | |
|---|---|---|---|---|---|---|---|
| **ML*=*Cimtluid ML* | | | | | | | |

L'utilisation de l'acide citrique permet d'accroître le temps d'utilisation de la composition.

### EXEMPLE 11 :

Dans la composition selon l'exemple 1, le poly(méth)acrylate a été remplacé par un adjuvant contenant un gluconate (Cimaxtard 101, Axim), dans les proportions suivantes :

| ADJUVANT X (g) | | ETALEMENT (mm) | TEMPS D'UTILISATION (min) | Δ t₂ (min) |
|---|---|---|---|---|
| ML* | Cimaxtard 101 | | | |
| 2 | 0,25 | - | 8,5 | 2,0 |
| 2 | 0,50 | - | 13,0 | 2,0 |
| 2 | 1,00 | 120 | 22,0 | 3,5 |
| 2 | 1,5 | - | 23,5 | 4,0 |

| | | | | |
|---|---|---|---|---|
| **ML=Cimfluid ML* | | | | |

L'utilisation de Cimaxtard 101 permet d'accroître le temps d'utilisation de la composition sans pénaliser la rhéologie initiale.

### EXEMPLE 12 :

Le poly(méth)acrylate (Cimfluid AC) seul a été ajouté à la composition cimentaire de base, dans les proportions indiquées ci-après :

| ADJUVANT x (g) | ETALEMENT (mm) | TEMPS D'UTILISATION (min) | TEMPS DE DEBUT DE PRISE (min) | TEMPS DE FIN DE PRISE (min) | Δ t₁ (min) | Δ t₂ (min) |
|---|---|---|---|---|---|---|
| AC* | | | | | | |
| 0,6 | 82 | 7,0 | 7,5 | 14,2 | 6,7 | 1,1 |
| 1 | 186 | 14,4 | 13,5 | 25,5 | 12,0 | 2,0 |
| 2 | 234 | 28,6 | 23,0 | 39,5 | 16,5 | 2,9 |

| | | | | | | |
|---|---|---|---|---|---|---|
| **AC=Cimfluid 2000AC* | | | | | | |

L'utilisation de Cimfluid 2000AC seul permet aussi d'étendre la durée d'utilisation de la composition jusqu'à environ 30 min. Cependant, dans le cas où il est possible d'obtenir un temps d'utilisation de 28,6 min, on peut constater que la valeur de Δt₁ est plus importante que celle mesurée avec le mélange [ML (2 %) - AC (1 %)] (voir exemple 7).

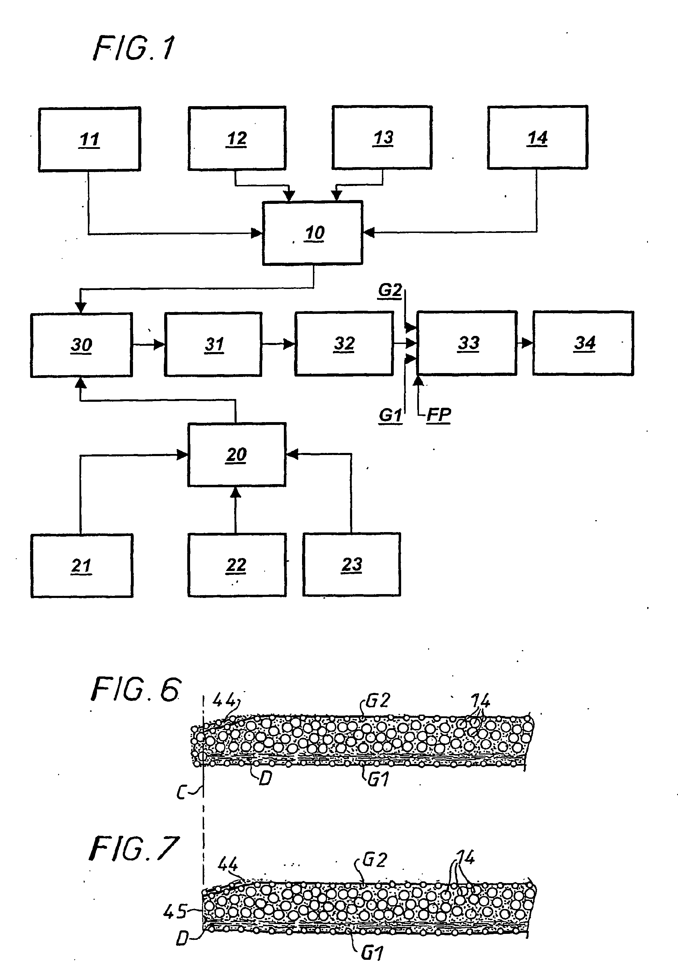

La figure 1 est un schéma illustrant un procédé de fabrication selon l'invention.

Un premier pré-mélange dosé 10 est réalisé à partir de ciment 11, d'un clinker 12, du plâtre 13 et de granulats 14, tels que des billes de polystyrène.

Un second pré-mélange dosé 20 est réalisé à partir d'un plastifiant 21 et d'un retardateur 23 auxquels on a ajouté de l'eau 22.

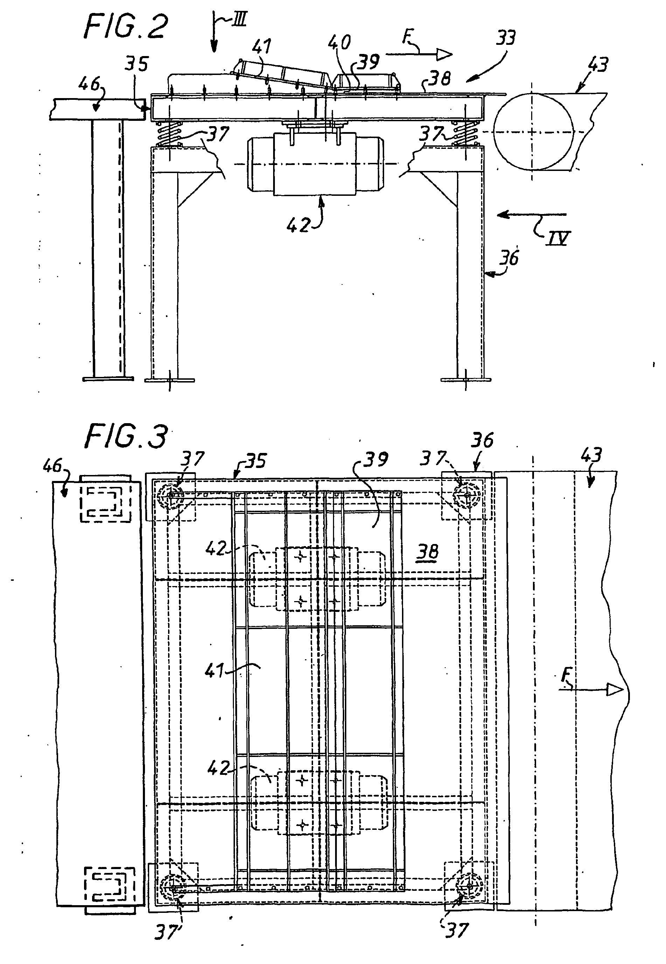

Les pré-mélanges 10 et 20 sont introduits dans un mélangeur 30; le mélange en résultant est repris par une pompe de reprise 31 et distribué par un distributeur 32 à l'entrée d'un extrudeur 33 ; la distribution est opérée, de manière homogène transversalement, entre deux parements inférieur et supérieur constituée de feuilles en forme de grilles, une grille Inférieure G1 et une grille supérieure G2 ; la grille inférieure G1 repose sur une feuille de matière plastique FP, telle qu'une feuille de polyéthylène, tirée par un tapis roulant aval 43, figures 2 et 3, et glisse sur une table 46 disposée en amont de l'extrudeur 33 ; à la sortie de l'extrudeur 33, la plaque ainsi mise en forme est acheminée à un poste de découpe 34 où sa longueur et ses bords, donc sa largeur, sont découpés, avantageusement au jet d'eau.

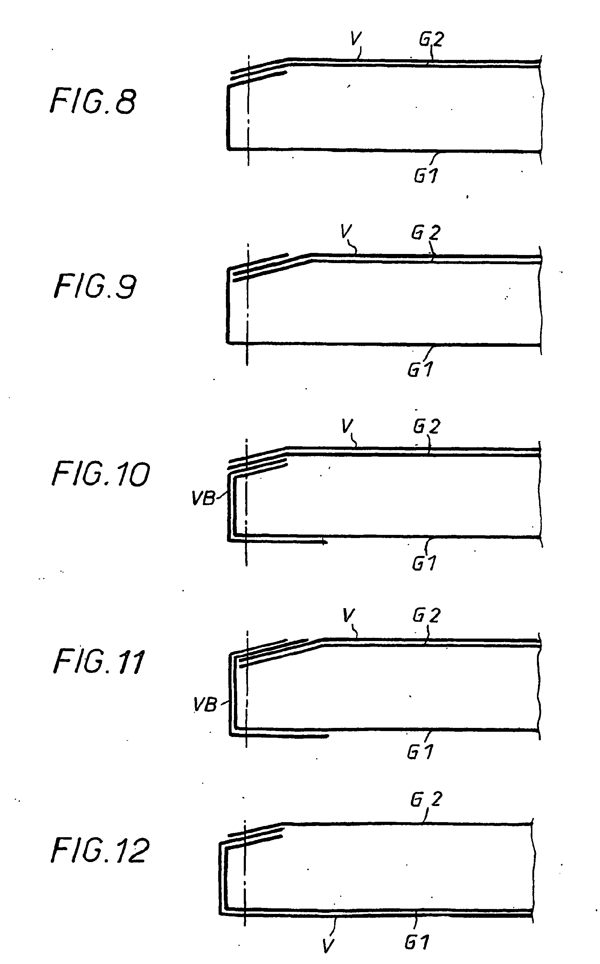

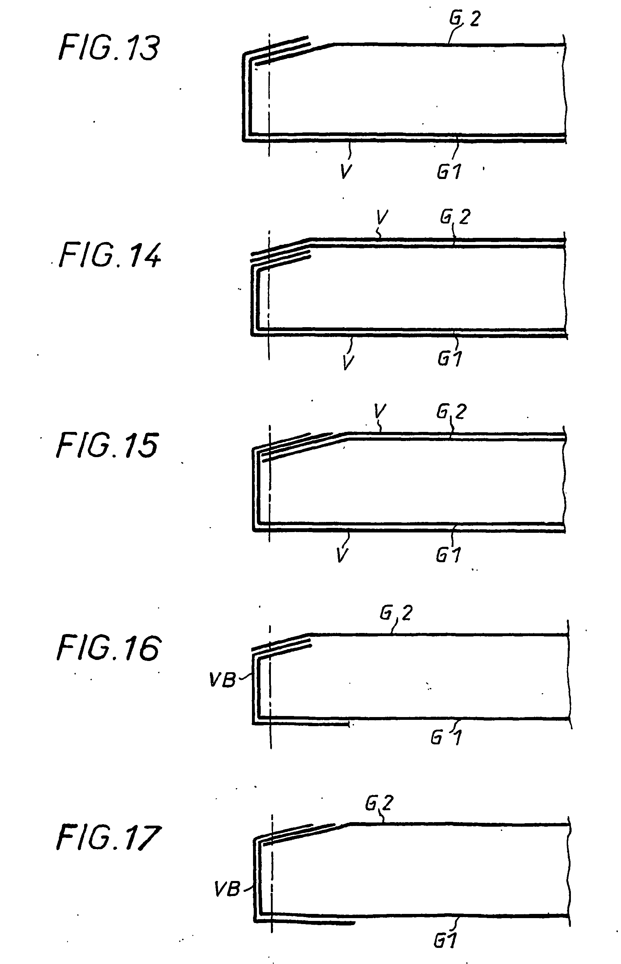

Lors de ce procédé, chaque parement est constitué d'une grille G1, G2 et/ou d'un voile V, VB et de préférence au moins une grille G1, G2 tel qu'illustré dans l'ensemble des formes de réalisation de la plaque des figures 6 à 17. Le voile V recouvre la grille G1, G2 sur toute sa largeur tel qu'illustré dans les formes de réalisation de la plaque des figures 8 à 15. Le voile est en forme de bande VB et recouvre les bords latéraux de la grille G2 tel qu'illustré dans les formes de réalisation de la plaque des figures 11 et 17. Les bords latéraux des plaques sont préalablement formés par retournement de la grille G1 inférieure puis coupés droits tel qu'illustré aux figures 6 à 17. La partie retournée de la grille inférieure G1 est recouverte de la grille supérieure G2 associée ou non à un voile V tel qu'illustré aux figures 8, 10, 12, 14, 16 et 18. La partie retournée de la grille inférieure G1 recouvre la grille supérieure G2 associée ou non à un voile V tel qu'illustré aux figures 6 - 7, 9, 11, 13, 15 et 17. Les bords latéraux de la grille inférieure G1 sont associés à un voile V, VB tel qu'illustré aux figures 10 à 17.

Avantageusement, la coupe est faite dans la partie de recouvrement.

L'extrudeur 33 est représenté schématiquement en partie sur les figures 2 à 4. II est constitué essentiellement d'une table 35 portée élastiquement par un châssis 36, grâce à des ressorts 37, Ici quatre ressorts hélicoïdaux disposés aux quatre coins de la table 35 de forme générale rectangulaire. Le plateau supérieur 38 de la table 35 constitue la lèvre inférieure d'une filière 40, disposée transversalement et de section globalement rectangulaire, dont on voit en 39 la lèvre supérieure ; cette lèvre supérieure 39 est ici en forme de lame et réglable en hauteur par rapport à la lèvre inférieure 38 en sorte que l'on peut régler la hauteur de la filière 40, donc l'épaisseur souhaitée de la plaque.

A l'entrée de la filière 40, un déflecteur 41 légèrement incliné guide la matière vers celle-ci.

La table 35 porte sur sa face inférieure au moins un vibreur 42, ici deux vibreurs 42. Un vibreur 42 est par exemple constitué par un moteur électrique dont le rotor a un balourd, réglable, adapté à produire des vibrations.

A la sortie de l'extrudeur 33, est réalisée selon la flèche F des figures 2 et 3 une plaque en continu tirée par le tapis roulant 43.

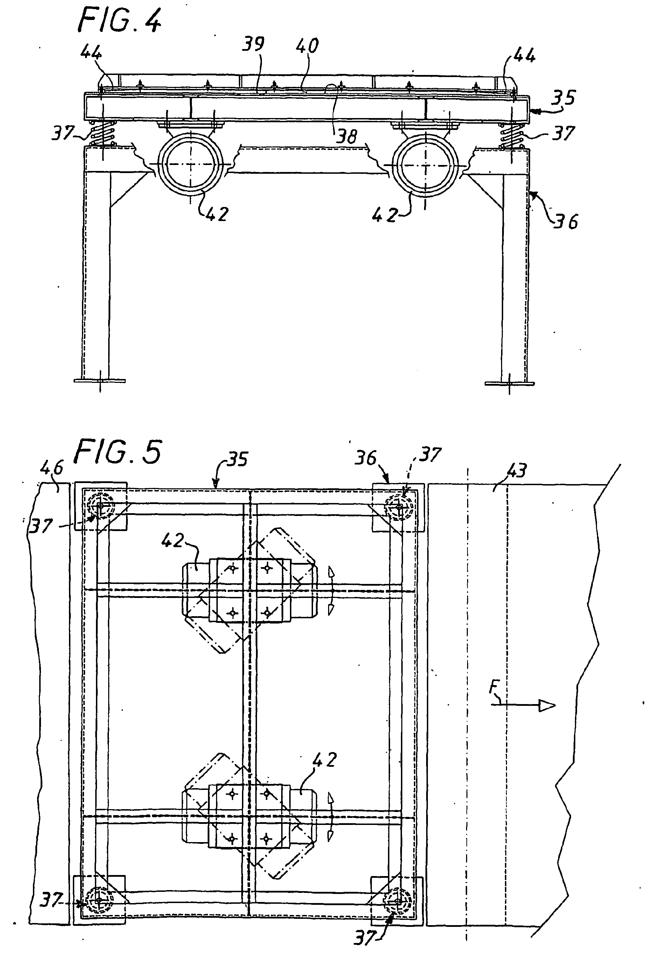

Ici, les axes des vibreurs 42 sont parallèles à la flèche F ; cet axe peut être orienté dans un plan horizontal, comme illustré sur la figure 5 où l'on voit en traits mixtes une autre orientation des vibreurs 42 ; il peut également être orienté dans un plan vertical, le plan de la figure 2 par exemple ; ces orientations permettent d'influencer favorablement transversalement l'homogénéité de la composition à l'entrée de l'extrudeur 33.

Ici, la filière 40 a la forme générale d'un rectangle dont les extrémités 44 se rapprochent légèrement l'une de l'autre vers l'extérieur en sorte que les bords latéraux parallèles de la plaque qui en résulte sont du type amincis, tel que cela est défini dans la norme NF P72-302 : cette disposition facilite la pose d'un enduit pour le jointoiement de deux plaques côte à côte, mais bien entendu ceci n'est pas obligatoire.

Les plaques sont enlevées du tapis après l'opération de distribution du mélange et de découpe ; la composition selon l'invention, la vitesse du tapis roulant et la longueur de la chaîne sont telles que, à cet instant, l'hydratation des plaques est telle que chaque plaque est manipulable.

Les plaques selon la présente invention peuvent avoir un corps de composition très variée.

Celui-ci peut être à base de sulfate de calcium hémihydrate et d'eau, comme décrit par exemple dans le document GB-A-2 0553 779 ; des additifs conventionnels peuvent être prévus, ainsi que de 0,3 à 3 % de fibre de verre ; il peut contenir également de la perlite, de la vermiculite, une résine à base de formaldéhyde, ou autre.

Les exemples, tels que ceux décrits dans le document WO-A-91/11321 conviennent également ; plus généralement, ici, des plaques sont obtenues en mélangeant des composants légers, tels que des argiles expansées, des cendres de hauts fourneaux expansées, des schistes expansés, de la perlite, des billes de polystyrène expansé, des billes de verre expansées, avec un liant hydraulique tel que ciment Portland, ciment à base de magnésium, ciment alumineux, gypse et/ou mélange de certains de ceux-ci, avec ou sans agents moussants.

Plus précisément, de bons résultats peuvent être obtenus avec les exemples suivants.

### EXEMPLE 13

Cette composition est du genre de celle décrite dans le document WO 99/08979.

| Composition | Pourcentage en poids (%) |
|---|---|
| Sulfate de Calcium hémihydrate | 100 |
| Eau | 94 - 98 |
| Accélérateur de prise | 1,1 - 1,6 |
| Amidon | 0,5 - 0,7 |
| Fluidifiant | 0,2 - 0,22 |
| Fibres de papier | 0,5 - 0,7 |
| Retardateur de prise | 0,07 - 0,09 |
| Agent moussant | 0,02 - 0,03 |
| Trimétaphosphate de Sodium | 0 - 0,16 |
| Inhibiteur de recalcination | 0,13 - 0,14 |

### EXEMPLE 14

Cette composition est du genre de celle décrite dans le document WO 99/14449.

| Composition | Formule générale | Formule spécifique |
|---|---|---|
| | Pourcentage en poids | Pourcentage en poids |
| Ciment | Type I : 30 - 50 % | Type I : 34 ± 2 % |
| Portland | Type II : 30 - 50 % | |
| | Type III : 30 - 50 % | |
| | Type IV : 30 - 50 % | |
| Ciment | Surface Blaine de | Surface Blaine |
| alumineux | 4000 à 5000 : 2 - 20 % | 4000 à 5000 : 4 ± 2 % |
| | Surface Blaine | |
| | 5000 à 6000 : 1 - 15 % | |
| | Sable pour mortier 0-1/16" : 30-60% | Sable pour mortier : 48 % ± 2% |
| | Sable pour bétons 0-1/8 : 30 - 60 % | |
| | Argile expansée : 15 - 50 % | |
| | Schiste expansé : 15 - 50 % | |
| | Déchets miniers expansés : 15-50% | |
| | Vermiculite expansée : 2 -10 % | |
| | Perlite expansée : 2 -10 % | |
| Polystyrène | Diamètre de 0 - 1/8" | 1 % ± 0,2 % |
| Eau | Potable : 10 - 30 % | 11 ± 5 % |
| Entraîneur d'air | Tensioactifs génériques 0 - 2 % | 0,015 % ± 0,005 % |

### EXEMPLE 15

Cette composition est du genre de celle décrite dans le document US-A-5 221 386.

| Composition | | Pourcentage en poids |
|---|---|---|
| Poudre | Ciment Portland TYPE III | 68,1 % |
| | Ciment alumineux Surface Blaine 6000 cm²/g | 17,79 % |
| | Plâtre | 5,69 % |
| | Chaux | 0.57 % |
| | Cendres volantes | 7,84 % |
| | Scories | |
| | Mousse | |
| | Billes de Polystyrène expansé | |
| | Autres | |
| | Total | 100 % |
| Liquide | Superplastifiant Lomar D | 1 % |
| | Solution aqueuse d'acide citrique à 8 % | 0,5 % |
| | Eau | 98,5 % |
| | Total | 100 % |
| Taux de gâchage | Rapport Liquide / Poudre | 0,35 |

La figure 6 montre partiellement en coupe une plaque selon l'invention avant que ses bords ne soient découpés ; on y reconnaît la grille inférieure G1, la grille supérieure G2, le bord aminci 44 et les granulats 14 ; ici, pour réaliser les bords de la plaque, la grille inférieure G1 est latéralement repliée jusqu'à recouvrir partiellement latéralement la grille supérieure G2.

On remarquera que, à la partie inférieure de la plaque, par rapport à la figure, une zone D de faible épaisseur est exempte de granulats 14 ; c'est donc une zone densifiée, obtenue grâce à la nature de la composition du corps de plaque et à l'extrusion sous vibrations ; grâce à cette zone, la tenue mécanique de la plaque est accrue.

En variante, la zone densifiée est rapportée, grâce au dépôt d'une couche exempte de granulats.

La figure 7 montre la plaque après découpe du bord 45 selon la ligne C de la figure 6.

Les bords latéraux parallèles sont droits.

Ici, également, comme illustré sur la figure 9, la grille supérieure G2 peut porter, par exemple par collage, un voile V constitué d'un mat de fibres de verre, par exemple ; un tel voile V augmente encore la tenue mécanique de la plaque ; ici, le voile V recouvre la grille G2 sur toute sa largeur.

Bien entendu, d'autres dispositions peuvent être adoptées.

Ainsi, comme le montre la figure 8, la grille G2, associée à un voile V, recouvre la partie latéralement repliée de la grille inférieure G1. La figure 10 est analogue à la figure 8 sauf que la grille inférieure G1 est associée à une bande de voile VB assujettie par exempte par collage le long de ses bords longitudinaux en sorte que la grille supérieure G2, éventuellement associée à un voile V, recouvre la partie repliée de la bande de voile VB qui aide à la réalisation du bord de la plaque. La figure 11 combine les dispositions décrites a propos des figures 9 et 10, c'est-à-dire que c'est la grille inférieure G1 ainsi que la bande de voile VB qui recouvrent la grille supérieure G2 et son voile V. Bien entendu, la grille inférieure G1 pourrait également porter un voile, tel que le voile V ; ainsi, les figures 12-15 illustrent les cas où la grille inférieure G1 porte un voile V, le reste étant comme aux figures 8, 9 avec une grille supérieure G2 sans voile, figures 12-13, ou avec voile V, figures 14-15 ; la grille G1 est recouverte du voile V sur toute sa largeur. Les figures 16,17 montrent une disposition analogue à celles des figures 12,13, dans lesquelles le voile V associé à la grille inférieure G1 a été remplacé par une bande de voile latérale VB.

Le voile en forme de bande VB ne recouvre que les bords latéraux de la grille G1 et/ou G2 ; ainsi, la grille supérieure G2 recouvre au moins partiellement une partie de grille G1 inférieure associée ou non à un voile V, VB ; en variante, c'est la grille supérieure G2 qui est recouverte au moins partiellement d'une partie de grille G1 associée ou non à un voile V, VB.

En variante, la lèvre supérieure 39 est la génératrice inférieure d'un rouleau cylindrique monté tournant autour d'un axe transversal.

Selon une variante non représentée, l'un au moins des parements, inférieur et/ou supérieur, est un carton, en remplacement de la grille et/ou du voile.

Avantageusement, une couche d'émulsion polymère de type latex (ou avec solvant organique) est déposée en surface de la plaque, sur une face ou sur les deux faces ; grâce à cette disposition, on obtient à la surface de la plaque un film protecteur. Ce film protecteur permet notamment de diminuer la perméabilité de la plaque, d'améliorer l'aspect de surface, de faciliter l'adhérence de tout revêtement tel que du carrelage et due limiter, dans une certaine mesure, les variations dimensionnelles de la plaque. Ce film protecteur peut être déposé par spray en surface, par coating avec rouleaux, par imprégnation de la (les) grille(s) associée ou non à un voile, soit par passage dans un bain, soit entre des rouleaux.

## Revendications

1. Procédé de fabrication d'une plaque à base de liant tel que plâtre ou ciment, comprenant des étapes de mélanger une composition de liant et de l'eau pour former la plaque ; déposer le mélange sur un support défilant, lequel est entraîné en continu par un convoyeur à bande, ledit mélange traversant un extrudeur soumis à des vibrations pour former une plaque et découper la plaque obtenue à longueur, **caractérisé en ce que** la composition comportant également des granulats légers et **en ce que** par suite de l'extrusion sous vibrations de la composition la partie inférieure de la planque a une région densifiée de faible épaisseur (D) exempte de granulats légers.

2. Procédé selon la revendication 1, **caractérisé en ce que** les granulats légers comprennent des billes de polystyrène.

3. Procédé selon la revendication 1, **caractérisé en ce que** les granulats légers sont choisis parmi des argiles expansés, des cendres de haut-foumeaux expansés, des schistes expansés, de la perlite, des billes de polystyrène expansé, des billes de verre expansées.

4. Procédé selon une des revendications 1 à 3, **caractérisé en ce que** la plaque est également découpée en largeur.

5. Procédé selon l'une des revendications 1 à 4, **caractérisé en ce que** le dépôt est réalisé sur un parement dit inférieur.

6. Procédé selon la revendication 5, **caractérisé en ce que** le dépôt est recouvert d'un parement dit supérieur.

7. Procédé selon l'une des revendications 5 ou 6, **caractérisé en ce que** le parement comprend d'une grille (G1, G2) et/ou d'un voile (V, VB).

8. Procédé selon la revendication 7, **caractérisé en ce que** la grille (G1, G2) est en fibres de verre.

9. Procédé selon l'une des revendications 7 ou 8, **caractérisé en ce que** le voile (V) recouvre la grille (G1, G2) sur toute sa largeur.

10. Procédé selon l'une des revendications 7 ou 8, **caractérisé en ce que** le voile est en forme de bande (VB) et ne recouvre que les bords latéraux de la grille (G2).

11. Procédé selon l'une des revendications 7 à 10, **caractérisé en ce que** le voile (V, VB) est un mat, de préférence en fibres de verre.

12. Procédé selon l'une des revendications 1 à 11, **caractérisé en ce que** la découpe est une découpe au jet d'eau.

13. Procédé selon l'une des revendications 5 à 12, **caractérisé en ce que** les bords latéraux des plaques sont préalablement formés par retournement de la grille inférieure (G1) puis coupés droits.

14. Procédé selon la revendication 13, **caractérisé en ce que** la partie retournée de la grille inférieure (G1) est recouverte de la grille supérieure (G2) associée ou non à un voile (V).

15. Procédé selon la revendication 13, **caractérisé en ce que** la partie retournée de la grille inférieure (G1) recouvre la grille supérieure (G2) associée ou non à un voile (V).

16. Procédé selon l'une des revendications 14 ou 15, **caractérisé en ce qu'**au moins les bords latéraux de la grille inférieure (G1) sont associés à un voile (V, VB).

17. Procédé selon l'une des revendications 13 à 16, **caractérisé en ce que** la coupe est faite dans la partie de recouvrement.

18. Procédé selon l'une des revendications 1 à 17, **caractérisé en ce que** le dépôt du mélange est conduit en sorte que deux des bords latéraux de la plaque sont amincis.

19. Procédé selon l'une des revendications 5 ou 6, **caractérisé en ce que** le parement inférieur et/ou supérieur est un carton.

20. Dispositif pour la mise en oeuvre du procédé selon l'une des revendications 1 à 19, comportant un mélangeur (30) de la composition, un support défilant sur lequel est déposé le mélange, un convoyeur à bande (43) pour entraîner en continu le support défilant, un extrudeur (33) comportant une filière (40) transversale d'extrusion pour former la plaque à partir du mélange, un poste de découpe (34) de la plaque à longueur, et un vibreur (42) apte à soumettre l'extrudeur à des vibrations.

21. Dispositif selon la revendication 20, **caractérisé en ce que** le poste de découpe (34) est un poste de découpe de la plaque à longueur et en largeur.

22. Dispositif selon la revendication 20 ou 21, **caractérisé en ce que** la filière (40) est munie d'une lèvre supérieure et d'une lèvre inférieure (38) qui porte le vibreur (42) sur sa face inférieure.

23. Dispositif selon la revendication 22, **caractérisé en ce que** la distance entre les lèvres supérieure (39) et inférieure (38) de la filière (40) est réglable.

24. Dispositif selon l'une des revendications 22 ou 23, **caractérisé en ce que** l'axe du vibreur (42) est orientable horizontalement.

25. Dispositif selon l'une des revendications 21 ou 22, **caractérisé en ce que** l'axe du vibreur (42) est orientable verticalement.

26. Dispositif selon l'une des revendications 20 à 25, **caractérisé en ce que** la filière (40) d'extrusion a la forme générale d'un rectangle dont les extrémités (44) des longueurs se faisant face se rapprochent légèrement l'une de l'autre vers l'extérieur.

27. Plaque à base de liant tel que plâtre ou ciment obtenue par le procédé selon l'une quelconque des revendications 1 à 19, comprenant un mélange d'un liant tel que plâtre ou ciment, des granulats légers (14) et de l'eau, **caractérisée en ce que** la partie inférieure du corps de la plaque a une région densifiée de faible épaisseur (D) exempte de granulats légers (14).

28. Plaque à base de liant tel que plâtre ou ciment selon la revendication 27, **caractérisée en ce que** qu'elle comporte en outre un parement supérieur et un parement inférieur, chacun des parements comprenant au moins une grille (G1, G2) et/ou un voile (V, VB), chacun des bords latéraux coupés (45) de la plaque forme une tranche latérale dépourvue de voile ou de grille.

29. Plaque à base de liant tel que plâtre ou ciment selon la revendication 27 ou 28, **caractérisée en ce que** la plaque à base de liant est en ciment.

30. Plaque à base de liant tel que plâtre ou ciment selon la revendication 28 ou 29, **caractérisée en ce que** les parements supérieur et/ou inférieur comprennent d'au moins une grille (G1, G2).

31. Plaque à base de liant tel que plâtre ou ciment selon la revendication 30, **caractérisée en ce qu'**un voile (V) recouvre la grille (G1,G2) d'au moins un des parements sur toute sa largeur.

32. Plaque à base de liant tel que plâtre ou ciment selon la revendication 30 ou 31, **caractérisée en ce que** le voile (V) est un mat en fibres de verre.

33. Plaque à base de liant tel que plâtre ou ciment selon l'une des revendications 30 à 32, **caractérisée en ce que** le parement inférieur comprend une grille (G1).

34. Plaque à base de liant tel que plâtre ou ciment selon la revendication 33, **caractérisée en ce que** la tranche latérale (43) est dans une zone de retournement de la grille inférieure (G1).

35. Plaque à base de liant tel que plâtre ou ciment selon la revendication 33, **caractérisée en ce que** le parement supérieur comprend une grille (G2), la tranche latérale est dans une zone de recouvrement de la grille supérieure (G2) sur la grille inférieure (G1).

36. Plaque à base de liant tel que plâtre ou ciment selon la revendication 33, **caractérisée en ce que** le parement supérieur comprend une grille (G2) associée à un voile (V), la tranche latérale étant dans une zone de recouvrement de la grille supérieure (G2) sur la grille inférieure (G1).

37. Plaque à base de liant tel que plâtre ou ciment selon la revendication 33, **caractérisée en ce que** le parement supérieur comprend une grille (G2), la tranche latérale (45) étant dans une zone de recouvrement de la grille inférieure (G1) sur la grille supérieure (G2).

38. Plaque à base de liant tel que plâtre ou ciment selon la revendication 33, **caractérisée en ce que** le parement supérieur comprend une grille (G2) associée à un voile (V), les tranches latérales étant dans une zone de recouvrement de la grille inférieure (G1) sur la grille supérieure (G2).

39. Plaque à base de liant tel que plâtre ou ciment selon l'une quelconque des revendications 33 à 38, **caractérisée en ce que** les bords latéraux de la grille inférieure (G1) sont associés à un voile (V,VB).

40. Plaque à base de liant tel que plâtre ou ciment selon l'une des revendications 27 à 39, **caractérisée en ce que** les bords latéraux de la plaque sont amincis.

41. Plaque à base de liant tel que plâtre ou ciment selon la revendication 27, **caractérisée en ce que** qu'elle comporte en outre un parement supérieur et un parement inférieur, au moins un des parements étant un carton.

## Claims

1. Method of fabricating a binder-based board such as a plaster or cement binder-based board, comprising steps of mixing a binder composition and water to form the board; depositing the mixture on a moving support, which is driven contiguously by a conveyor belt, said mixture passing through an extruder subjected to vibrations to form a board, and to cut the board obtained to length, **characterised in that** the composition also including lightweight aggregates and **in that** as a consequence of the extrusion under vibration of the composition the lower part of the board has a densified region of small thickness (D) devoid of lightweight aggregates.

2. Method according to claim 1, **characterised in that** the lightweight aggregates comprise polystyrene balls.

3. Method according to claim 1, **characterised in that** the lightweight aggregates are chosen from expanded clays, expanded blast furnace ash, expanded schist, perlite, expanded polystyrene balls, expanded glass balls.

4. Method according to any of claims 1 to 3, **characterised in that** the board is also cut to width.

5. Method according to any of claims 1 to 4, **characterised in that** the deposition is carried out on a so-called bottom facing.

6. Method according to claim 5, **characterised in that** the deposit is covered with a so-called top facing.

7. Method according to either claim 5 or claim 6, **characterised in that** the facing comprises a mesh (G1, G2) and/or a web (V, VB).

8. Method according to claim 7, **characterised in that** the mesh (G1, G2) is of glass fibers.

9. Method according to either claim 7 or claim 8, **characterised in that** the web (V) covers the mesh (G1, G2) over its entire width.

10. Method according to claim 7 or claim 8, **characterised in that** the web (VB) is in the form of a strip and covers only the lateral edges of the mesh (G2).

11. Method according to one of claims 7 to 10, **characterised in that** the web (V, VB) is a mat, preferably of glass fibers.

12. Method according to one of claims 1 to 11, **characterised in that** the cutting is effected by cutting with a water jet.

13. Method according to one of claims 5 to 12, **characterised in that** the lateral edges of the boards are formed beforehand by turning over the bottom mesh (G1) and then cut straight.

14. Method according to claim 13, **characterised in that** the turned over portion of the bottom mesh (G1) is covered by the top mesh (G2) whether or not it is associated with a web (V).

15. Method according to claim 13, **characterised in that** the turned over portion of the bottom mesh (G1) covers the top mesh (G2) whether or not it is associated with a web (V).

16. Method according to either claim 14 or claim 15, **characterised in that** at least the lateral edges of the bottom mesh (G1) are associated with a web (V, VB).

17. Method according to one of claims 13 to 16, **characterised in that** the cutting is effected in the overlapping portion.

18. Method according to one of claims 1 to 17, **characterised in that** deposition of the mixture is carried out in such a way that two of the lateral edges of the boards are tapered.

19. Method according to either claim 5 or claim 6, **characterised in that** the top and/or bottom facing is of cardboard.

20. Device for implementing the method according to any of claims 1 to 19, including a mixer (30) for the composition, a moving support on which the mixture is deposited, a conveyor belt (43) for driving the moving support continuously, an extruder (33) including a transverse extrusion die (40) to form the board from the mixture, a station (34) for cutting the board to length, and a vibrator (42) adapted to submit the extruder to vibrations.

21. Device according to claim 20, **characterised in that** the cutting station (34) is a station for cutting the board to length and to width.

22. Device according to claim 20 or 21, **characterised in that** the die (40) has a top lip and a bottom lip (38) which carries the vibrator (42) on its bottom face.

23. Device according to claim 22, **characterised in that** the distance between the top lip (39) and the bottom lip (38) of the die (40) is adjustable.

24. Device according to either claim 22 or claim 23, **characterised in that** the axis of the vibrator (42) can be oriented horizontally.

25. Device according to either claim 21 or claim 22, **characterised in that** the axis of the vibrator (42) can be oriented vertically.

26. Device according to one of claims 20 to 25, **characterised in that** the extrusion die (40) has a generally rectangular shape with the ends (44) of the facing lengths converging slightly in the outward direction.

27. Binder-based board such as a plaster or cement based-board obtained by the method according to any of claims 1 to 19, comprising a mixture of a binder such as a plaster or cement based board, lightweight aggregates (14) and water, **characterised in that** the lower part of the body of the board has a densified region of a small thickness (D) devoid of lightweight aggregates (14).

28. Binder-based board such as a plaster or cement based board according to claim 27, **characterised in that** it further includes a top facing and a bottom facing, each of the facings comprising at least one mesh (G1, G2) and/or one web (V, VB), each of the cut lateral edges (45) of the board forms a lateral edge without any web or mesh.

29. Binder-based board such as a plaster or cement based board according to claim 27 or 28, **characterised in that** the binder-based board is a cement-based board.

30. Binder-based board such as a plaster or cement based board according to claim 28 or 29, **characterised in that** the top and/or bottom facings comprise at least one mesh (G1, G2).

31. Binder-based board such as a plaster or cement based board according to claim 30, **characterised in that** a web (V) covers the mesh (G1, G2) of at least one of the facings over its entire width.

32. Binder-based board such as a plaster or cement based board according to claim 30 or 31, **characterised in that** the web (V) is a glass fibre mat.

33. Binder-based board such as a plaster or cement based board according to any of claims 30 to 32, **characterised in that** the bottom facing comprises a mesh (G1).

34. Binder-based board such as a plaster or cement based board-based board according to claim 33, **characterised in that** the lateral edge (43) is in a turned-over area of the bottom mesh (G1).

35. Binder-based board such as a plaster or cement based board according to claim 33, **characterised in that** the top facing comprises a mesh (G2), the lateral edge is in an area in which the top mesh (G2) covers the bottom mesh (G1).

36. Binder-based board such as a plaster or cement based board according to claim 33, **characterised in that** the top facing comprises a mesh (G2) associated with a web (V), the lateral edge being in an area in which the top mesh (G2) covers the bottom mesh (G1).

37. Binder-based board such as a plaster or cement based board according to claim 33, **characterised in that** the top facing comprises a mesh (G2), the lateral edge (45) being in an area in which the bottom mesh (G1) covers the top mesh (G2).

38. Binder-based board such as a plaster or cement based board according to claim 33, **characterised in that** the top facing comprises a mesh (G2) associated with a web (V), the lateral edges being in an area in which the bottom mesh (G1) covers the top mesh (G2).

39. Binder-based board such as a plaster or cement based board according to any of claims 33 to 38, **characterised in that** the lateral edges of the bottom mesh (G1) are associated with a web (V, VB).

40. Binder-based board such as a plaster or cement based board according to any of claims 27 to 39, **characterised in that** the lateral edges of the board are thinned.

41. Binder-based board such as a plaster or cement based board according to claim 27, **characterised in that** it further includes a top facing and a bottom facing, at least one of the facing being cardboard.

## Patentansprüche

1. Verfahren zur Herstellung einer Platte auf der Basis eines Bindemittels wie Gips oder Zement, umfassend die Schritte des Mischens einer Zusammensetzung aus Bindemittel und Wasser zur Formung der Platte, des Auftragens der Mischung auf einen sich vorbeibewegenden Träger, der durch einen Bandförderer kontinuierlich angetrieben wird, wobei die Mischung einen Extruder durchquert, der Vibrationen ausgesetzt ist, um eine Platte zu formen, und des Auf Länge-Schneidens der erhaltenen Platte, **dadurch gekennzeichnet, dass** die Zusammensetzung ferner Leichtgranulat umfasst und dass der untere Teil der Platte infolge der Extrusion der Zusammensetzung unter Vibrationen eine verdichtete Zone von kleiner Dicke (D) aufweist, die frei von Leichtgranulat ist.

2. Verfahren nach Anspruch 1, **dadurch gekennzeichnet, dass** das Leichtgranulat Kugeln aus Polystyrol umfasst.

3. Verfahren nach Anspruch 1, **dadurch gekennzeichnet, dass** das Leichtgranulat aus expandierten Tonen, expandierten Hochofenaschen, expandierten Schiefern, Perlit, Kugeln aus expandiertem Polystyrol, expandierten Glaskugeln ausgewählt ist.

4. Verfahren nach einem der Ansprüche 1 bis 3, **dadurch gekennzeichnet, dass** die Platte auch auf Breite geschnitten wird.

5. Verfahren nach einem der Ansprüche 1 bis 4, **dadurch gekennzeichnet, dass** der Auftrag auf einer sogenannten unteren Verkleidung stattfindet.

6. Verfahren nach Anspruch 5, **dadurch gekennzeichnet, dass** der Auftrag mit einer sogenannten oberen Verkleidung bedeckt wird.

7. Verfahren nach einem der Ansprüche 5 oder 6, **dadurch gekennzeichnet, dass** die Verkleidung aus einem Gitter (G1, G2) und/oder einer Bahn (V, VB) besteht.

8. Verfahren nach Anspruch 7, **dadurch gekennzeichnet, dass** das Gitter (G1, G2) aus Glasfasern besteht.

9. Verfahren nach einem der Ansprüche 7 oder 8, **dadurch gekennzeichnet, dass** die Bahn (V) das Gitter (G1, G2) auf seiner ganzen Breite bedeckt.

10. Verfahren nach einem der Ansprüche 7 oder 8, **dadurch gekennzeichnet, dass** die Bahn in Bandform (VB) ist und nur die seitlichen Ränder des Gitters (G2) bedeckt.

11. Verfahren nach einem der Ansprüche 7 bis 10, **dadurch gekennzeichnet, dass** die Bahn (V, VB) eine Matte vorzugsweise aus Glasfasern ist.

12. Verfahren nach einem der Ansprüche 1 bis 11, **dadurch gekennzeichnet, dass** der Schnitt ein Wasserstrahlschnitt ist.

13. Verfahren nach einem der Ansprüche 5 bis 12, **dadurch gekennzeichnet, dass** die seitlichen Ränder der Platten zuvor durch Umschlagen des unteren Gitters (G1) geformt und dann gerade geschnitten werden.

14. Verfahren nach Anspruch 13, **dadurch gekennzeichnet, dass** der umgeschlagen Teil des unteren Gitters (G1) mit dem oberen Gitter (G2) bedeckt wird, das einer Bahn (V) zugeordnet ist oder nicht.

15. Verfahren nach Anspruch 13, **dadurch gekennzeichnet, dass** der umgeschlagene Teil des unteren Gitters (G1) das obere Gitter (G2) bedeckt, das einer Bahn (V) zugeordnet ist oder nicht.

16. Verfahren nach einem der Ansprüche 14 oder 15, **dadurch gekennzeichnet, dass** mindestens die seitlichen Ränder des unteren Gitters (G1) einer Bahn (V, VB) zugeordnet sind.

17. Verfahren nach einem der Ansprüche 13 bis 16, **dadurch gekennzeichnet, dass** der Schnitt in dem Bedeckungsteil vorgenommen wird.

18. Verfahren nach einem der Ansprüche 1 bis 17, **dadurch gekennzeichnet, dass** der Auftrag der Mischung so durchgeführt wird, dass zwei der seitlichen Ränder der Platte verdünnt sind.

19. Verfahren nach einem der Ansprüche 5 oder 6, **dadurch gekennzeichnet, dass** die untere und/ oder obere Verkleidung ein Karton ist.

20. Vorrichtung zur Durchführung des Verfahrens nach einem der Ansprüche 1 bis 19, umfassend eine Vorrichtung (30) zum Mischen der Zusammensetzung, einen sich vorbeibewegenden Träger, auf den die Mischung aufgetragen wird, einen Bandförderer (43) zum kontinuierlichen Antrieb des sich vorbeibewegenden Trägers, einen Extruder (33), der eine Extrusions-Querdüse (40) zum Formen der Platte aus der Mischung umfasst, eine Vorrichtung (34) zum Schneiden der Platte auf Länge und einen Vibrator (42), der den Extruder Vibrationen aussetzen kann.

21. Vorrichtung nach Anspruch 20, **dadurch gekennzeichnet, dass** die Schneidvorrichtung (34) eine Vorrichtung zum Schneiden der Platte auf Länge und auf Breite ist.

22. Vorrichtung nach Anspruch 20 oder 21, **dadurch gekennzeichnet, dass** die Düse (40) mit einer oberen Lippe und mit einer unteren Lippe (38) versehen ist, die den Vibrator (42) auf ihrer Unterseite trägt.

23. Vorrichtung nach Anspruch 22, **dadurch gekennzeichnet, dass** der Abstand zwischen der oberen (39) und der unteren (38) Lippe der Düse (40) verstellbar ist.

24. Vorrichtung nach einem der Ansprüche 22 oder 23, **dadurch gekennzeichnet, dass** die Achse des Vibrators (42) horizontal verschwenkbar ist.

25. Vorrichtung nach einem der Ansprüche 21 oder 22, **dadurch gekennzeichnet, dass** die Achse des Vibrators (42) vertikal verschwenkbar ist.

26. Vorrichtung nach einem der Ansprüche 20 bis 25, **dadurch gekennzeichnet, dass** die Extrusionsdüse (40) die allgemeine Form eines Rechtecks besitzt, bei dem die Enden (44) der einander gegenüberstehenden Längen sich nach außen leicht einander annähern.

27. Platte auf der Basis von Bindemittel wie Gips oder Zement, die durch das Verfahren nach einem der Ansprüche 1 bis 19 erhalten wurde und eine Mischung aus einem Bindemittel wie Gips oder Zement, Leichtgranulat (14) und Wasser umfasst, **dadurch gekennzeichnet, dass** der untere Teil des Körpers der Platte einen verdichteten Bereich von geringer Dicke (D) aufweist, der frei von Leichtgranulat (14) ist.

28. Platte auf der Basis von Bindemittel wie Gips oder Zement nach Anspruch 27, **dadurch gekennzeichnet, dass** sie außerdem eine obere Verkleidung und eine untere Verkleidung umfasst, wobei jede der Verkleidungen mindestens ein Gitter (G1, G2) und/oder eine Bahn (V, VB) umfasst, wobei jeder der geschnittenen seitlichen Ränder (45) der Platte eine seitliche Schmalkante bildet, die frei von einer Bahn oder einem Gitter ist.

29. Platte auf der Basis von Bindemittel wie Gips oder Zement nach Anspruch 27 oder 28, **dadurch gekennzeichnet, dass** die Platte auf der Basis von Bindemittel aus Zement besteht.

30. Platte auf der Basis von Bindemittel wie Gips oder Zement nach Anspruch 28 oder 29, **dadurch gekennzeichnet, dass** die obere und/oder die untere Verkleidung aus mindestens einem Gitter (G1, G2) bestehen.

31. Platte auf der Basis von Bindemittel wie Gips oder Zement nach Anspruch 30, **dadurch gekennzeichnet, dass** eine Bahn (V) das Gitter (G1, G2) mindestens einer der Verkleidungen auf seiner ganzen Breite bedeckt.

32. Platte auf der Basis von Bindemittel wie Gips oder Zement nach Anspruch 30 oder 31, **dadurch gekennzeichnet, dass** die Bahn (V) eine Matte aus Glasfasern ist.

33. Platte auf der Basis von Bindemittel wie Gips oder Zement nach einem der Ansprüche 30 bis 32, **dadurch gekennzeichnet, dass** die untere Verkleidung ein Gitter (G1) umfasst.

34. Platte auf der Basis von Bindemittel wie Gips oder Zement nach Anspruch 33, **dadurch gekennzeichnet, dass** die seitliche Schmalkante (43) sich in einer Umschlagzone des unteren Gitters (G1) befindet.

35. Platte auf der Basis von Bindemittel wie Gips oder Zement nach Anspruch 33, **dadurch gekennzeichnet, dass** die obere Verkleidung ein Gitter (G2) umfasst, die seitliche Schmalkante sich in einer Zone der Bedeckung des oberen Gitters (G2) auf dem unteren Gitter (G1) befindet.

36. Platte auf der Basis von Bindemittel wie Gips oder Zement nach Anspruch 33, **dadurch gekennzeichnet, dass** die obere Verkleidung ein Gitter (G2) umfasst, das einer Bahn (V) zugeordnet ist, wobei die seitliche Schmalkante sich in einer Zone der Bedeckung des oberen Gitters (G2) auf dem unteren Gitter (G1) befindet.

37. Platte auf der Basis von Bindemittel wie Gips oder Zement nach Anspruch 33, **dadurch gekennzeichnet, dass** die obere Verkleidung ein Gitter (G2) umfasst, wobei die seitliche Schmalkante (45) sich in einer Zone der Bedeckung des unteren Gitters (G1) auf dem oberen Gitter (G2) befindet.

38. Platte au der Basis von Bindemittel wie Gips oder Zement nach Anspruch 33, **dadurch gekennzeichnet, dass** die obere Verkleidung ein Gitter (G2) umfasst, das einer Bahn (V) zugeordnet ist, wobei die seitlichen Schmalkanten sich in einer Zone der Bedeckung des unteren Gitters (G1) auf dem oberen Gitter (G2) befinden.

39. Platte auf der Basis von Bindemittel wie Gips oder Zement nach einem der Ansprüche 33 bis 38, **dadurch gekennzeichnet, dass** die seitlichen Ränder des unteren Gitters (G1) einer Bahn (V, VB) zugeordnet sind.

40. Platte auf der Basis von Bindemittel wie Gips oder Zement nach einem der Ansprüche 27 bis 39, **dadurch gekennzeichnet, dass** die seitlichen Ränder der Platte verdünnt sind.

41. Platte auf der Basis von Bindemittel wie Gips oder Zement nach Anspruch 27, **dadurch gekennzeichnet, dass** sie außerdem eine obere Verkleidung und eine untere Verkleidung umfasst, wobei mindestens eine der Verkleidungen ein Karton ist.
